# FASCICULE DE BREVET EUROPEEN

(11) **EP 0 664 237 B1**
(45) Date de publication et mention de la délivrance du brevet: **10.09.1997**
(21) Numéro de dépôt: 95400124.4
(22) Date de dépôt: 23.01.1995
(51) Int. Cl.: B60K 37/00

(54) **Tableau de bord comprenant un rehaut**
Armaturenbrett mit Zwischenstück
Dashboard with insert element

(30) Priorité: 24.01.1994 FR 9400699
(43) Date de publication de la demande: 26.07.1995
(73) Titulaire: MAGNETI MARELLI FRANCE, 92000 Nanterre (FR)
(72) Inventeur: Guirauton, Pascal, F-95370 Montigny les Cormeilles (FR)
(74) Mandataire: Texier, Christian

(56) Documents cités:
- EP-A- 0 378 739
- EP-A- 0 499 549
- EP-A- 0 505 221
- DE-A- 3 834 623
- DE-A- 4 121 248
- PATENT ABSTRACTS OF JAPAN vol. 13 no. 252 (M-836) ,12 Juin 1989 & JP-A-01 058529 (HASHIMOTO FORMING) 6 Mars 1989,

## Description

La présente invention concerne le domaine des tableaux de bord de véhicules, en particulier de véhicules automobiles.

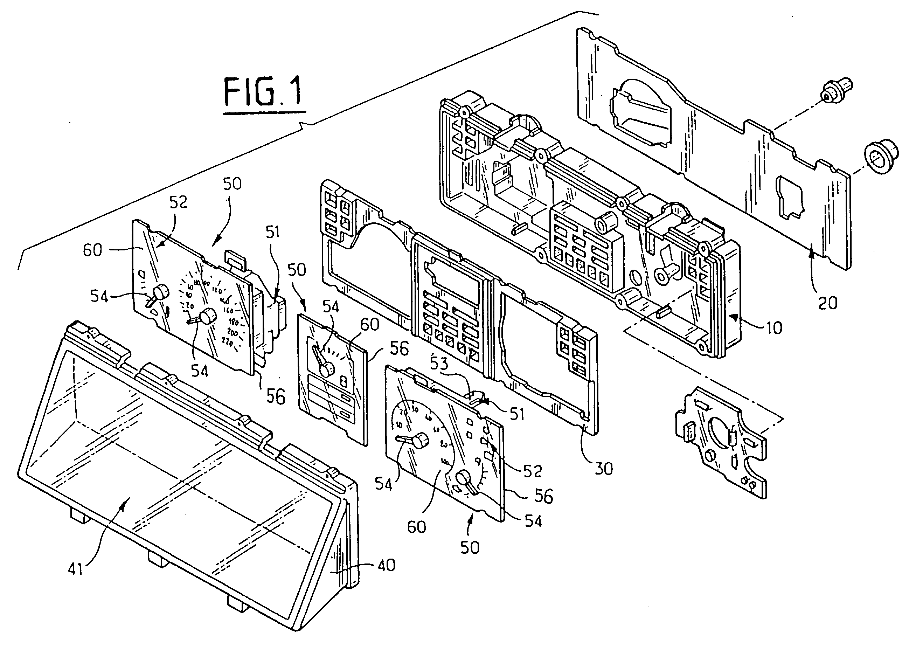

On a représenté sur la figure 1 annexée, en perspective éclatée, la structure générale d'un tableau de bord classique.

On aperçoit sur la figure 1 annexée, un tableau de bord comprenant un boitier 10, un circuit imprimé 20 placé sur la face arrière du boitier 10, un réhaut 30 placé sur la face avant du boitier 10, une visière 40 munie d'une vitre transparente 41 placée sur l'avant du réhaut 30 et plusieurs modules indicateurs 50.

Le réhaut 30 est formé d'une pièce d'habillage visible, qui sert d'entretoise entre la visière 40 du tableau et la face avant du boitier 10. Ce réhaut 30 est réalisé fréquemment en Acrylonitrile/butadiène/styrène (ABS).

Certains tableaux de bord comprennent également un "faux cadran". Dans le domaine automobile, on entend par "faux cadran", une pièce d'habillage située en avant du cadran et comportant des fenêtres à travers lesquelles sont visibles des plages utiles de cadran et/ou des témoins indicateurs.

Le plus souvent, chaque module indicateur 50 comprend au moins un mouvement de mesure 51 comportant un organe moteur 53 apte à entrainer une aiguille 54, plusieurs témoins lumineux 52 et un cadran 60 placé sur l'arrière des aiguilles 54 et portant diverses indications.

Le cadran 60 associé aux aiguilles 54 des mouvements de mesure peut servir par exemple de compteur de vitesse ou de compte-tours.

Les indications portées sur le cadran 60 peuvent faire l'objet d'un grand nombre de variantes.

Généralement, les cadrans 60 des modules indicateurs 50 sont portés par des plaques 56 en matériau optiquement transparent, servant de guides optiques pour transmettre de la lumière d'éclairage notamment aux aiguilles 54.

Le document DE-A-4121248 illustre schématiquement un exemple de réalisation de tableau de bord. Il décrit en outre particulièrement un guide optique en matière optiquement transparente.

La présente invention a maintenant pour but de perfectionner les tableaux de bord connus.

Ce but est atteint selon la présente invention grâce à un tableau de bord comprenant :
- un boitier,
- une visière placée en avant du boîtier,
- une pièce d'habillage insérée entre la visière et la face avant du boitier, et
- au moins un module indicateur comportant au moins un cadran fixé sur un guide optique en matériau optiquement transparent,
caractérisé par le fait que la pièce d'habillage est venue de moulage en matériau optiquement transparent, avec le guide optique du module indicateur, et par le fait que la pièce d'habillage est pourvue d'un revêtement composé de vernis on peinture sur sa face avant.

Selon un premier mode de réalisation, la pièce d'habillage venue de moulage avec le guide optique, est formée d'un faux cadran.

Selon un second mode de réalisation, cette pièce d'habillage est formée d'un réhaut.

Selon un troisième mode de réalisation, cette pièce d'habillage constitue à la fois un faux cadran et un réhaut.

D'autres caractéristiques, buts et avantages de la présente invention apparaîtront à la lecture de la description détaillée qui va suivre, et en regard des dessins annexés donnés à titre d'exemples non limitatifs et sur lesquels :
- la figure 1, précédemment décrite, représente une vue schématique en perspective d'un tableau de bord conforme à l'état de la technique,
- la figure 2 représente une vue schématique en coupe d'un tableau de bord conforme à la présente invention, et
- les figures 3 et 4 représentent, en coupe, deux variantes de réalisation conformes à la présente invention.

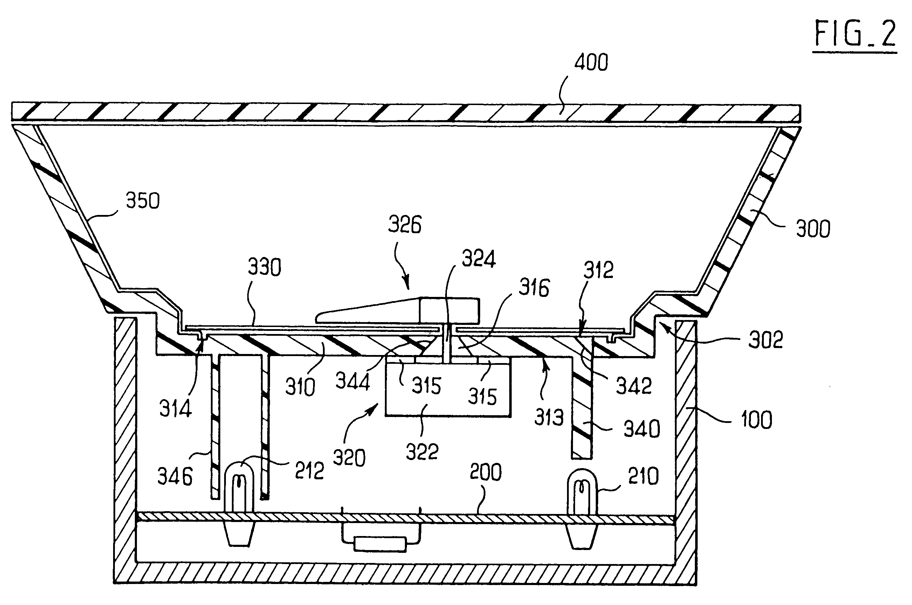

On aperçoit sur la figure 2 annexée un tableau de bord conforme à la présente invention comprenant un boitier 100, un circuit imprimé 200 placé dans le boitier 100, un réhaut 300 et une visière 400.

Plus précisément, le réhaut 300 est venu de moulage, en matériau optiquement transparent, avec un guide optique 310 de module indicateur.

Par ailleurs, le réhaut 300 est muni sur sa face avant d'un revêtement d'habillage 350.

La pièce formant venue de moulage, le réhaut 300 et le guide optique 310 peut faire l'objet de nombreuses variantes de réalisation quant à sa géométrie.

De préférence, cette pièce comprend essentiellement une plaque généralement plane formant le guide optique 310, entourée d'une jupe périphérique formant le réhaut 300 proprement dit. La jupe périphérique formant le réhaut 300 peut être par exemple évasée en éloignement de la plaque 310 du guide optique comme représenté sur la figure 2. Par ailleurs, comme on le voit sur la figure 2, la périphérie extérieure de la plaque 310 formant guide optique peut être raccordée à la base de la jupe formant réhaut 300 par l'intermédiaire de décrochements 302. Ceux-ci peuvent faire l'objet de nombreuses variantes de réalisation. Ils ne seront donc pas décrits dans le détail par la suite.

Le réhaut 300 et la plaque formant guide optique 310 peuvent être réalisés en tout matériau transparent, par exemple à base de polycarbonate ou de poly(méthacrylate de méthyle).

Le revêtement d'habillage 350 placé sur la face avant du réhaut 300 peut être formé par exemple d'un dépôt de vernis ou de peinture.

Selon une caractéristique importante de la présente invention, pour éviter que le revêtement d'habillage 350 ne recouvre la partie optiquement active du guide optique 310, celui-ci est pourvu de préférence, sur sa face avant 312, d'une gorge périphérique 314 qui sert de confinement ou limite intérieure, au revêtement 350. On comprend en effet que cette gorge 314 reçoit les éventuels débordements ou écoulements du dépôt 350 et évite de tels écoulements sur le reste de la face avant 312 de la plaque du guide optique 310.

De préférence, la gorge 314 est une gorge continue qui entoure totalement la zone centrale du guide optique 310.

Comme on le voit sur la figure 2, le guide optique 310 sert de préférence de support à des instruments indicateurs à aiguille 320. Plus précisément, la face arrière 313 du guide optique 310 est avantageusement munie de structures 315 servant de support au boîtier 322 de l'élément moteur, par exemple un logomètre, de l'indicateur 320. Cet élément moteur 322 a un arbre de sortie 324 placé dans un passage traversant 316 formé dans le guide optique 310, lequel arbre moteur 324 est conçu pour supporter une aiguille 326 placée sur la face avant du guide optique 310. Un cadran 330 pourvu d'échelles graduées est prévu de préférence sur la face avant 312 du guide optique 310. Le cadran 330 est intercalé entre cette face avant 312 et les aiguilles 326. Le cadran 330 recouvre avantageusement la gorge 314 et la périphérie intérieure du revêtement d'habillage 350.

Le cadran 330 peut être réalisé avantageusement à base de toute technique classique de sérigraphie.

Le guide optique 310 est par ailleurs pourvu de préférence de structures à effet de prisme pour assurer l'éclairage de l'index d'aiguille 326. De telles structures à effet de prisme, connues en elles-mêmes ne seront pas décrites dans le détail par la suite.

On aperçoit cependant sur la figure 2, une protubérance 340 venue de moulage en saillie sur la face arrière 313 du guide optique 310. Cette protubérance 340 a son extrémité arrière placée en regard d'une source lumineuse 210 supportée et alimentée par des techniques connues. La protubérance 340 débouche face avant au niveau du guide optique 310, sur une facette de renvoi 342 inclinée de préférence d'environ 45° par rapport au plan moyen du guide optique 310. Ainsi, la lumière reçue par la protubérance 340 en provenance de la source lumineuse 210 est renvoyée par la facette 342 dans le guide optique 310, et de là, par l'intermédiaire de facettes 344 délimitant le passage 316 et entourant l'arbre de sortie 324, vers l'aiguille 326.

Comme on le voit également sur la figure 2, le guide optique 310 peut être pourvu sur sa face arrière 313 de cloisons 346 situées en regard d'une part de plages translucides formant témoins réalisées dans le cadran 330, d'autre part en regard de sources lumineuses 212 portées par le circuit imprimé 200. Ces cloisons 346 formant cheminée permettent ainsi de canaliser la lumière issue de sources lumineuses 212 vers les symboles associés formés dans le cadran 330.

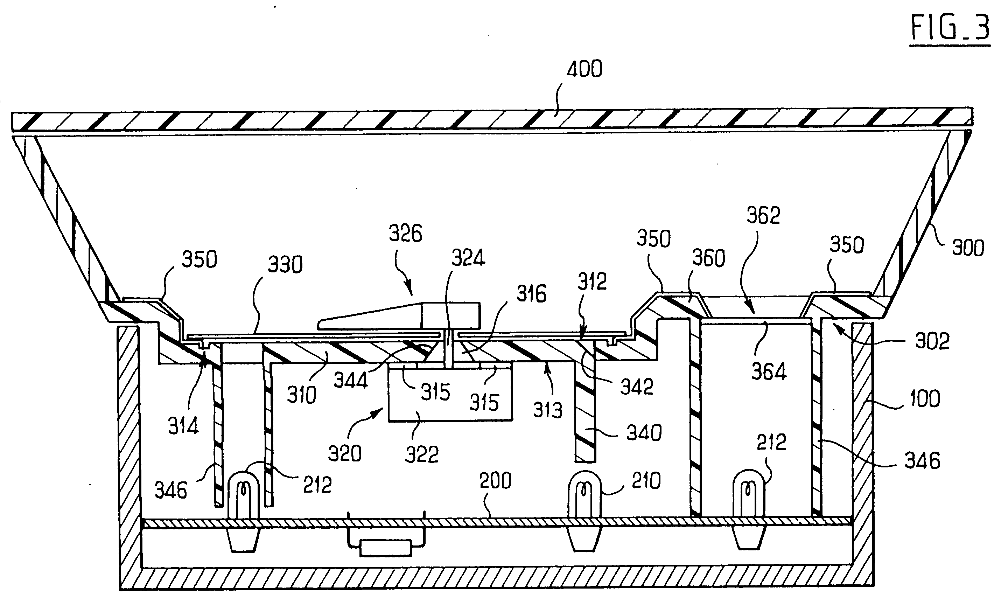

On aperçoit sur la figure 3 annexée une variante de réalisation selon laquelle la pièce d'habillage venue de moulage avec le guide optique 310 est formée d'un faux cadran 360, et non point d'un réhaut 300. Ce faux cadran 360 est avantageusement situé sur la périphérie du guide optique 310. Il est muni sur sa face avant d'un revêtement 350 comme indiqué précédemment, dont le confinement intérieur est de préférence défini par la gorge 314. Dans ce cas le réhaut indépendant 300 peut être réalisé de façon classique, par exemple en ABS.

On aperçoit plus précisément sur la figure 3, une fenêtre 362 formée dans le faux cadran 360 en regard d'un témoin lumineux 364.

Bien entendu ce faux cadran peut faire l'objet de nombreuses variantes de réalisation.

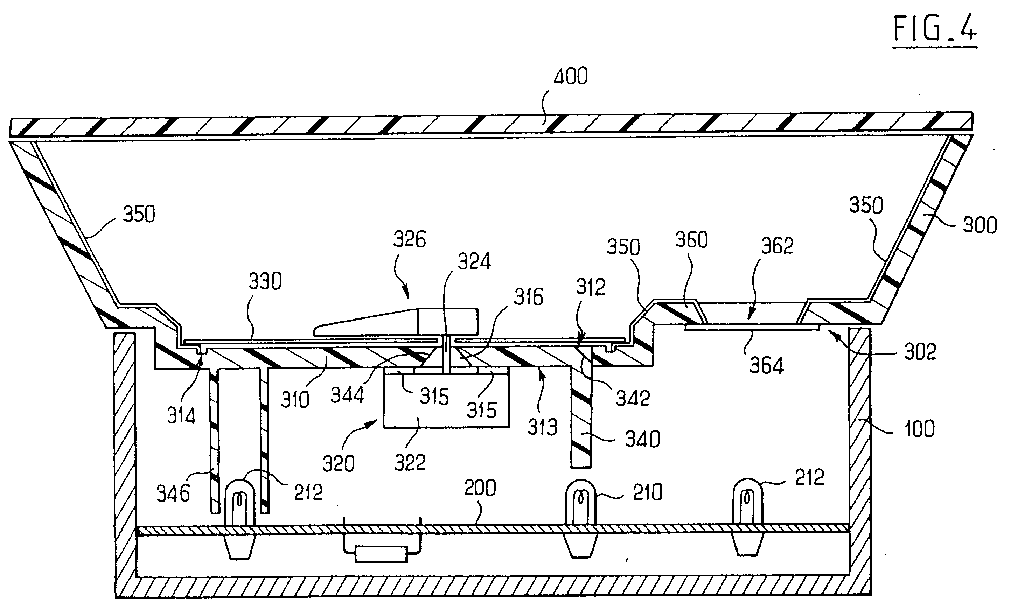

On a représenté sur la figure 4 annexée une autre variante de réalisation selon laquelle la pièce d'habillage venue de moulage avec le guide optique 310 constitue à la fois un faux cadran 360 et un réhaut 300. Le faux cadran 360 relie alors la périphérie du guide optique 310 à la base du réhaut 300. Le faux cadran 360 et le réhaut 300 sont là encore munis d'un revêtement 350.

Suivant une autre caractéristique avantageuse de la présente invention, le matériau composant le guide optique 310 et la pièce d'habillage 360/300 venue de moulage avec ce guide, peut être constitué par un matériau photophore c'est-à-dire comportant des particules d'un matériau apte à provoquer un changement de longueur d'onde dans la lumière reçue, préférentiellement adapté pour transformer une lumière incidente d'éclairage invisible en une lumière réémise visible.

Bien entendu la présente invention n'est pas limitée au mode de réalisation particulier qui vient d'être décrit mais s'étend à toute variante conforme à son esprit.

Par exemple selon une variante de réalisation le circuit imprimé 200 peut être placé à l'extérieur du boîtier 100. Ce circuit imprimé 200 peut d'ailleurs être souple. Ou encore il peut être prévu un circuit imprimé dans le boîtier 100 et un circuit imprimé à l'extérieur de ce boîtier. Par ailleurs, les cheminées 346 peuvent être venues de moulage sur le boîtier 100.

Selon encore une autre variante, la pièce d'habillage 300, 360 peut également être venue de moulage avec une partie du boîtier 100.

## Revendications

1. Tableau de bord pour véhicule automobile comprenant :
- un boîtier (100),
- une visière (400) placée en avant du boîtier (100),
- une pièce d'habillage (300, 360) insérée entre la visière (400) et la face avant du boîtier (100), et
- au moins un module indicateur (322, 326) comportant au moins un cadran (330) fixé sur un guide optique (310) en matériau optiquement transparent,
caractérisé par le fait que la pièce d'habillage (300, 360) est venue de moulage en matière optiquement transparente avec le guide optique (310) du module indicateur et par le fait que la pièce d'habillage (300, 360) est pourvue d'un revêtement (350) composé de vernis on peinture sur sa face avant.

2. Tableau selon la revendication 1, caractérisé par le fait que la pièce d'habillage (360) venue de moulage avec le guide optique (310) est formé d'un faux cadran.

3. Tableau selon la revendication 1, caractérisé par le fait que la pièce d'habillage (300) venue de moulage avec le guide optique (310) est formée d'un réhaut.

4. Tableau selon l'une des revendications 1 à 3, caractérisé par le fait que la pièce d'habillage venue de moulage avec le guide optique (310) constitue à la fois un faux cadran (360) et un réhaut (300).

5. Tableau selon l'une des revendications 1, 3 ou 4, caractérisé par le fait que la pièce composant le réhaut (300) venu de moulage avec le guide optique (310) comprend une plaque centrale plane (310) formant guide optique entourée d'une jupe périphérique (300) formant réhaut.

6. Tableau selon l'une des revendications 1 à 5, caractérisé par le fait que la plaque formant guide optique (310) est pourvue d'une gorge périphérique, sur sa face avant, servant à délimiter le revêtement d'habillage (350), et éviter que celui-ci ne se répande sur la face avant, optiquement active, du guide optique (310).

7. Tableau selon l'une des revendications 1 et 3 à 6, caractérisé par le fait que le réhaut (300) est évasé en éloignement du guide optique (310).

8. Tableau selon l'une des revendications 1 et 3 à 7, caractérisé par le fait que le réhaut (300) est relié à la plaque de guide optique (310) par l'intermédiaire d'au moins un décrochement (302).

9. Tableau selon l'une des revendications 1 à 8, caractérisé par le fait que le guide optique (310) comprend sur sa face arrière (313) des structures (315) servant de support à des moyens indicateurs (322).

10. Tableau selon l'une des revendications 1 à 9, caractérisé par le fait que le guide optique (310) est pourvu sur sa face arrière (313) de cloisons (346) délimitant des cheminées placées en regard de sources lumineuses (212).

11. Tableau selon l'une des revendications 1 à 10, caractérisé par le fait que le guide optique (310) est pourvu de structures à effet de prisme (340, 342, 344) aptes à guider de la lumière issue de sources lumineuses vers des moyens indicateurs à aiguille (326) et/ou vers des symboles prévus dans le cadran (330).

12. Tableau selon l'une des revendications 1 à 11, caractérisé par le fait que le guide optique (310) comprend un matériau photophore.

## Claims

1. A motor vehicle dashboard comprising:
• a housing (100);
• a visor (400) placed in front of the housing (100);
• a piece of trim (300, 360) inserted between the visor (400) and the front face of the housing (100); and
• at least one indicator module (322, 326) including at least one dial (330) fixed on a light guide (310) of optically transparent material;
the dashboard being characterized by the fact that the piece of trim (300, 360) is integrally molded out of optically transparent material with the light guide (310) of the indicator module, and by the fact that the piece of trim (300, 360) is provided with a coating (350) made of varnish or paint on its front face.

2. A dashboard according to claim 1, characterized by the fact that the piece of trim (360) integrally molded with the light guide (310) is shaped to include a dummy dial.

3. A dashboard according to claim 1, characterized by the fact that the piece of trim (300) integrally molded with the light guide (310) is shaped to include a bezel.

4. A dashboard according to any one of claims 1 to 3, characterized by the fact that the piece of trim integrally molded with the light guide (310) constitutes both a dummy dial (360) and a bezel (300).

5. A dashboard according to any one of claims 1, 3, and 4, characterized by the fact that the bezel-forming piece (300) integrally molded with the light guide (310) comprises a lightguide-forming plane central plate (310) surrounded by a bezel-forming peripheral skirt (300).

6. A dashboard according to any one of claims 1 to 5, characterized by the fact that the lightguide-forming plate (310) is provided with a peripheral groove in its front face serving to outline the coating (350) of the trim and to prevent it from spreading over the optically active front face of the light guide (310).

7. A dashboard according to any one of claims 1, and 3 to 6, characterized by the fact that the bezel (300) flares away from the light guide (310).

8. A dashboard according to any one of claims 1 and 3 to 7, characterized by the fact that the bezel (300) is connected to the light guide plate (310) via at least one step (302).

9. A dashboard according to any one of claims 1 to 8, characterized by the fact that the light guide (310) includes, on its back face (313), structures (315) serving to support indicator means (322).

10. A dashboard according to any one of claims 1 to 9, characterized by the fact that the light guide (310) is provided on its back face (313) with partitions (346) defining chimneys placed facing light sources (212).

11. A dashboard according to any one of claims 1 to 10, characterized by the fact that the light guide (310) is provided with prism-effect structures (340, 342, 344) suitable for guiding light from light sources to pointer indicator means (326) and/or to symbols provided in the dial (330).

12. A dashboard according to any one of claims 1 to 11, characterized by the fact that the light guide (310) includes a fluorescent material.

## Patentansprüche

1. Instrumententafel für ein Kraftfahrzeug, mit
- einem Gehäuse (100),
- einer vor dem Gehäuse (100) angeordneten Sichtscheibe (400),
- einem zwischen der Sichtscheibe (400) und der Vorderseite des Gehäuses (100) eingefügten Verkleidungsstück (300, 360) und
- mindestens einem Anzeigemodul (322, 326), das mindestens eine auf einem optischen Leiter (310) aus optisch transparentem Material befestigte Skalenscheibe (330) aufweist,
**dadurch gekennzeichnet**
daß das Verkleidungsstück (300, 360) mit dem optischen Leiter (310) des Anzeigemoduls aus optisch transparentem Material gegossen ist und daß das Verkleidungsstück (300, 360) auf seiner Vorderseite mit einem aus Lack oder Farbe bestehenden Bezug (350) versehen ist.

2. Instrumententafel nach Anspruch 1, dadurch gekennzeichnet, daß das mit dem optischen Leiter (310) gegossene Verkleidungsstück (360) aus einer Skalenscheibe-Schablone gebildet ist.

3. Instrumententafel nach Anspruch 1, dadurch gekennzeichnet, daß das mit dem optischen Leiter (310) gegossene Verkleidungsstück (300) aus einem Zwischenstuck gebildet ist.

4. Instrumententafel nach einem der Ansprüche 1 bis 3, dadurch gekennzeichnet, daß das mit dem optischen Leiter (310) gegossene Verkleidungsstück zugleich eine Skalenscheiben-Schablone (360) und ein Zwischenstuck (300) darstellt.

5. Instrumententafel nach einem der Ansprüche 1, 3 oder 4, dadurch gekennzeichnet, daß das Teil, welches das mit dem optischen Leiter (310) gegossene Zwischenstück (300) bildet, eine den optischen Leiter bildende zentrale ebene Platte (310) umfaßt, die von einer das Zwischenstück bildenden umlaufenden Schürze (300) umgeben ist.

6. Instrumententafel nach einem der Ansprüche 1 bis 5, dadurch gekennzeichnet, daß die den optischen Leiter (310) bildende Platte auf ihrer Vorderseite mit einer umlaufenden Vertiefung versehen ist, die zur Begrenzung des Bezugs (350) des Verkleidungsstücks dient, so daß dieser sich nicht über die optisch aktive Vorderseite des optischen Leiters (310) erstreckt.

7. Instrumententafel nach einem der Ansprüche 1 und 3 bis 6, dadurch gekennzeichnet, daß sich das Zwischenstück (300) von dem optischen Leiter (310) weg konisch erweitert.

8. Instrumententafel nach einem der Ansprüche 1 und 3 bis 7, dadurch gekennzeichnet, daß das Zwischenstück (300) mittels mindestens eines Absatzes (302) mit der Platte des optischen Leiters (310) verbunden ist.

9. Instrumententafel nach einem der Ansprüche 1 bis 8, dadurch gekennzeichnet, daß der optische Leiter (310) auf seiner Rückseite (313) Strukturen (315) aufweist, die zur Aufnahme von Anzeigemitteln (322) dienen.

10. Instrumententafel nach einem der Ansprüche 1 bis 9, dadurch gekennzeichnet, daß der optische Leiter (310) auf seiner Rückseite (313) mit Zwischenwänden (346) versehen ist, die bezüglich Lichtquellen (212) ausgerichtete Kanäle begrenzen.

11. Instrumententafel nach einem der Ansprüche 1 bis 10, dadurch gekennzeichnet, daß der optische Leiter (310) Strukturen (340, 342, 344) mit Prismenwirkung aufweist, die dazu geeignet sind, von Lichtquellen ausgesandtes Licht zu Anzeigemitteln (326) mit Zeigern und/oder zu in der Skalenscheibe (330) vorgesehenen Symbolen zu leiten.

12. Instrumententafel nach einem der Ansprüche 1 bis 11, dadurch gekennzeichnet, daß der optische Leiter (310) ein lichtleitendes Material umfaßt.
